# EUROPÄISCHE PATENTSCHRIFT

(11) **EP 2 718 581 B1**
(45) Veröffentlichungstag und Bekanntmachung des Hinweises auf die Patenterteilung: **18.01.2017**
(21) Anmeldenummer: 12727338.1
(22) Anmeldetag: 01.06.2012
(51) Int. Cl.: F16D 55/2255, F16D 65/56, F16D 65/18

(54) **MEHRFACHKOLBEN-SCHEIBENBREMSE**
MULTIPLE-PISTON DISK BRAKE
FREIN À DISQUE MULTIPISTONS

(30) Priorität: 09.06.2011 DE 102011103823
(43) Veröffentlichungstag der Anmeldung: 16.04.2014
(73) Patentinhaber: KNORR-BREMSE Systeme für Nutzfahrzeuge GmbH, 80809 München (DE)
(72) Erfinder: PRITZ, Wolfgang, 80637 München (DE)
(86) Internationale Anmeldenummer: PCT/EP2012/060360
(87) Internationale Veröffentlichungsnummer: WO 2012/168148

(56) Entgegenhaltungen:
- EP-A1- 2 175 156
- EP-A2- 1 160 476
- WO-A1-2006/111136
- DE-B3-102009 013 005

## Beschreibung

Die Erfindung betrifft eine Mehrfachkolben-Scheibenbremse nach dem Oberbegriff des Anspruchs 1.

Mehrfachkolben-Scheibenbremsen mit hydraulischer oder pneumatischer Betätigung über Bremszylinder, die auf eine Zuspanneinheit einwirken, sind in verschiedensten Ausgestaltungen bekannt.

Die Patentschrift DE 10 2009 013 005 B3 beschreibt eine derartige Doppelkolben-Scheibenbremse.

Eine weitere Patentschrift DE 10 2009 013005 B3 gibt eine Radbremse mit einer integrierten Nachstelleinrichtung, mit einem in einem Bremsgehäuse geführten und gegen einen Bremsbelag arbeitenden Druckstempel, einer Zuspanneinrichtung zur Betätigung des Druckstempels, und einem im Kraftfluss zwischen Zuspanneinrichtung und Druckstempel innerhalb des Bremsgehäuses angeordneten Nachstellelement, das in Schraubverbindung mit dem Druckstempel steht, an.

In der Anmeldeschrift EP 1 160 476 A2 ist eine Scheibenbremse mit einem Bremsmechanismus beschrieben. Die Scheibenbremse umfasst einen Bremssattel, der eine Bremsscheibe übergreift und einen Hohlraum zur Aufnahme des Bremsmechanismus aufweist. Der Bremsmechanismus weist einen Lagerträger auf, der von der Innenseite in einer Öffnung des Bremssattels in der Seitenwand am weitesten von der Bremsscheibe entfernt aufgenommen ist. Der Bremsmechanismus weist einen Nachstellmechanismus an einer Nachstellwelle und einer Rückstellwelle auf. Es sind Mittel zur Übertragung einer Bewegung zwischen der Nachstellerwelle und der Rückstellwelle vorgesehen. Der Nachstellmechanismus wird von einem Hebel des Bremsmechanismus betätigt und wird bei Montage in dem Lagerträger aufgenommen.

Eine weitere Anmeldeschrift EP 2 175 156 A1 beschreibt eine Scheibenbremse, insbesondere für ein Nutzfahrzeug. Die Scheibenbremse umfasst einen Bremssattel, der eine Bremsscheibe übergreift; beidseitig an die Bremsscheibe anpressbare Bremsbeläge, von denen ein zuspannseitiger, mittels eines um eine Exzenterachse verschwenkbaren Bremshebels einer Zuspanneinrichtung betätigbar ist, wobei der Bremssattel zumindest eine mit einer Kalotte versehene Lageraufnahme aufweist, in der ein kugelförmiges Lagerelement des Bremshebels einliegt. Die Lageraufnahme ist als separates Stützelement in eine Öffnung des Bremssattels eingesetzt.

Die Aufgabe der vorliegenden Erfindung besteht darin, eine verbesserte Mehrfachkolben-Scheibenbremse mit einer vereinfachten Lagerung der Druckstempel mit einer verbesserten Dichtungseinrichtung bereitzustellen.

Die Aufgabe wird durch eine Mehrfachkolben-Scheibenbremse mit den Merkmalen des Anspruchs 1 gelöst.

Demgemäß umfasst eine Mehrfachkolben-Scheibenbremse einen eine Bremsscheibe übergreifenden Bremssattel; mindestens zwei Druckstempel, welche zur Aufbringung einer Zuspannkraft auf wenigstens einen Bremsbelag in Richtung der Bremsscheibe in dem Bremssattel beweglich angeordnet sind; eine Druckplatte, welche mit den mindestens zwei Druckstempeln gekoppelt ist; eine Zuspanneinheit, welche ein Druckrohr mit einer Nachstelleinrichtung, eine Brücke und einen Hebel aufweist. Die Mehrfachkolben-Scheibenbremse ist dadurch gekennzeichnet, dass jeder der mindestens zwei Druckstempel in einer mit dem Bremssattel fest verbundenen Druckstempelführung axial verschiebbar gelagert ist.

Die Mehrkolben-Scheibenbremse verbindet Einfachheit, Robustheit und Wartungsfreundlichkeit einer Einstempelbremse mit den Vorteilen der Mehrfachkolben-Betätigung. Die Zahl der Einzelteile ist im Gegensatz zum Stand der Technik bedeutend vermindert.

In einer Ausführung ist die Druckstempelführung in einer Bodenplatte angeordnet. Dadurch werden zusätzliche Halterungen und Führungen eingespart.

Die Druckstempelführung der Mehrfachkolben-Scheibenbremse kann mit der Bodenplatte einstückig ausgebildet sein. Somit ergibt sich eine robuste einfache Ausführung, wobei die in den Druckstempeln aufgenommenen Tangentialkräfte beim Bremsvorgang direkt auf kurzem Weg über die Druckstempelführungen in die Bodenplatte eingeleitet werden können.

Die Druckstempelführung kann zudem mit einer Dichtungseinrichtung versehen sein, welche mit einem zugehörigen Druckstempel zusammenwirkt. Damit wird eine einfache und wirkungsvolle Abdichtung des Bremseninnenraums erzielt.

Besonders vorteilhaft ist es, wenn die Dichtungseinrichtung mindestens ein Abstreifelemente und mindestens ein Dichtungselement aufweist, wobei diese hintereinander angeordnet sind.

Dabei ist vorgesehen, dass das mindestens eine Abstreifelement auf der dem Bremsbelag zugewandten Seite der Bodenplatte angeordnet ist und dass mindestens ein Dichtungselement auf der dem Bremsbelag abgewandten Seite der Bodenplatte angeordnet ist. Somit ergibt sich eine einfache Anordnung, die auch zusätzlich Wartungs- und Austauscharbeiten des Dichtungselementes erleichtert, da das mindestens eine Dichtungselement von der dem Bremsbelag abgewandten Seite der Bodenplatte her erreichbar ist.

In einer weiteren Ausführung ist die Druckplatte mit den mindestens zwei Druckstempeln über Druckgelenke, die um eine Achse senkrecht zu einer Zuspannrichtung verschwenkbar sind, gekoppelt. Die Druckgelenke können Bolzenverbindungen aufweisen, welche leicht montierbar und demontierbar sind, wodurch sich ein einfacher und schneller Ein- und Ausbau ergibt.

In einer noch weiteren Ausführung können die Druckplatte und/oder der Hebel als bearbeitetes Schmiedeteil oder als Gussteil ausgebildet sein. Dadurch können Kraftflussverläufe innerhalb dieser Bauteile besonders vorteilhaft beeinflusst und eine lange Standzeit erreicht werden.

Es ist auch möglich, dass die Nachstelleinrichtung im Bremssattel von außen erreichbar und austauschbar angeordnet ist, wodurch sich Wartungszeiten reduzieren lassen.

Eine Bremsanlage für ein Fahrzeug kann mit der oben beschriebenen Mehrfachkolben-Scheibenbremse ausgerüstet sein.

Es ist auch keine Synchronisation der Druckstempel mit zusätzlichen Bauteilen erforderlich, denn die Druckgelenke, die Druckplatte und die in den Druckstempelführungen der Bodenplatte geführten Druckstempel bilden miteinander eine relativ starre Verbindung der Druckstempel.

Durch die geringe Anzahl von Bauteilen ergibt sich auch eine Gewichtsreduzierung.

Das innerhalb des Bremsinnenraums angeordnete Dichtungselement ist geringeren Verschmutzungen ausgesetzt. Außerdem kann ist es leicht erreichbar und austauschbar.

Ein so genanntes Belagherausdrehen kann verhindert werden.

Die Zuspanneinheit kann mit unterschiedlichen mehrarmigen Druckplatten für eine variable Anzahl von Druckstempeln verwendet werden.

Ein Schrägverschleiß von Bremsbelägen kann durch die in der Bodenplatte fest angeordneten Druckstempelführungen reduziert werden.

Die Erfindung wird nun anhand einer beispielhaften Ausführung mit Bezug auf die beigefügten Zeichnungen näher erläutert. Hierbei zeigen:
- Fig. 1: eine schematische, perspektivische Explosionsdarstellung eines Ausführungsbeispiels einer erfindungsgemäßen Mehrfachkolben-Scheibenbremse;
- Fig. 2: eine schematische, perspektivische Ansicht des Ausführungsbeispiels nach Fig. 1 in einem montierten Zustand;
- Fig. 3: eine schematische Schnittdarstellung der Ansicht nach Fig. 2;
- Fig. 4: eine perspektivische Teilansicht von Bauteilen des Ausführungsbeispiels nach Fig. 1 mit einer dreiarmigen Druckplatte; und
- Fig. 5: eine perspektivische Ansicht der dreiarmigen Druckplatte nach Fig. 4.

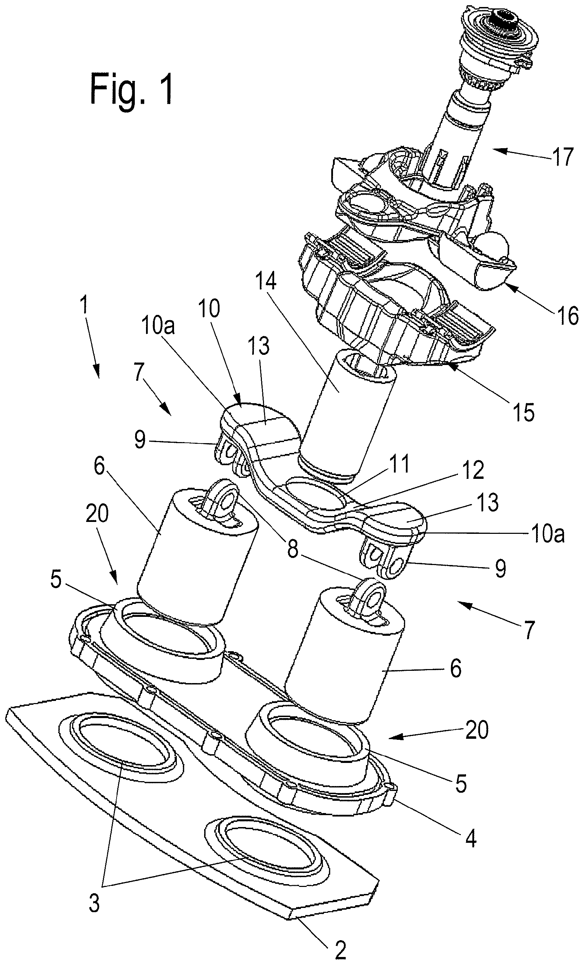

Fig. 1 ist eine schematische, perspektivische Explosionsdarstellung eines Ausführungsbeispiels einer erfindungsgemäßen Mehrfachkolben-Scheibenbremse 1.

Die Scheibenbremse 1 ist in diesem Ausführungsbeispiel eine MehrfachkolbenScheibenbremse 1 mit zwei Kolben, die als Druckstempel 6 ausgeführt sind. Die Scheibenbremse 1 ist hier von ihrer Zuspannseite dargestellt und weist einen Bremssattel auf, der nicht dargestellt ist und eine ebenfalls nicht gezeigte Bremsscheibe übergreift. An der Bremsscheibe sind beidseitig Bremsbeläge 2 angeordnet, von denen hier nur der zuspannseitige Bremsbelag 2 abgebildet ist. Der andere Bremsbelag ist im Bremssattel festgelegt. Der Bremsbelag 2 ist vereinfacht dargestellt, ein Bremsbelagträger ist nicht gezeigt. Der Bremssattel kann zum Beispiel ein Schiebesattel sein. Rückhol- und Spannfedern sind nicht gezeigt, aber leicht vorstellbar.

Der Bremsbelag 2 bzw. der Bremsbelagträger weist zwei Druckabschnitte 3 auf, welche jeweils zur Zusammenwirkung mit einer Unterseite eines Druckstempels6 vorgesehen sind. Die Druckstempel 6 sind in einer Bodenplatte 4 axial in einer Zuspannrichtung geführt. Die Bodenplatte 4 ist mit dem nicht gezeigten Bremssattel fest verbunden und weist zur Führung eines jeden Druckstempels 6 eine Druckstempelführung 5 auf.

Jede Druckstempelführung 5 erstreckt sich senkrecht zur Bodenplatte 4 und steht von ihr auf beiden Seiten um ein bestimmtes Maß hervor. Eine Dichtungseinrichtung 20 zur Abdichtung der Druckstempel 6 gegenüber der Bodenplatte 4 und dem Bremseninnenraum ist in jeder Druckstempelführung 5 vorgesehen und wird unten noch näher erläutert. Die Bodenplatte 4 und ihre Druckstempelführungen 5 sind zur Aufnahme von tangentialen Kräften beim Bremsvorgang entsprechend robust ausgelegt.

Auf den zu den mit dem Bremsbelag 2 zusammenwirkenden Unterseiten der Druckstempel 6 gegenüberliegenden Enden sind die Druckstempel 6 mit einer Druckplatte 10 jeweils über ein Druckgelenk 7 gelenkig verbunden. Ein Druckgelenk 7 besteht aus einem zungenförmigen Stempelgelenkabschnitt 8 und einem hier gabelförmigen Druckplattengelenkabschnitt 9. Die Gelenkabschnitte 8 und 9 sind durch einen Bolzen (nicht dargestellt) schwenkbar verbunden. Eine Schwenkung ist um die Achse des jeweiligen Bolzens bzw. Druckgelenks 7 möglich, um Ungleichmäßigkeiten beim Bremsvorgang auszugleichen. Auch diese Druckgelenke 7 sind entsprechend robust gestaltet. Diese Schwenkachse verläuft senkrecht zu einer Zuspannrichtung bzw. zur Mittelachse des zugehörigen Druckstempels 6 und tangential zur Drehrichtung der Bremsscheibe. Mittels dieser Druckgelenke 7, der Druckplatte 10 und der in den Druckstempelführungen 5 der Bodenplatte 4 geführten Druckstempel 6 ist eine relativ starre Verbindung der Druckstempel 6 geschaffen, wodurch keine Synchronisation der Druckstempel 6 mittels zusätzlicher Bauteile notwendig wird.

Die Druckplatte 10 weist zwei Druckarme 10a auf, an deren Unterseite (d.h. zu den Druckstempeln 6 weisend) jeweils ein Druckplattengelenkabschnitt 9 angebracht ist. Die Druckarme 10a sind senkrecht zur Zuspannrichtung und parallel zur Tangentialrichtung zur nicht gezeigten Bremsscheibe angeordnet. Die Druckarme 10a sind untereinander über einen Mittelabschnitt 12 verbunden und von diesem jeweils nach außen hin nach oben gegen die Zuspannrichtung gekröpft ausgebildet.

Der Mittelabschnitt 12 der Druckplatte 10 weist einen Krafteinleitungsabschnitt 11 auf und jeder Druckarm 10a bildet an seinem Ende einen Druckabschnitt 13.

Der Krafteinleitungsabschnitt 11 ist zur Zusammenwirkung mit einer Zuspanneinheit vorgesehen. Diese Zuspanneinheit umfasst ein Gewinderohr 14, eine Brücke 15 und einen Hebel 16 (auch als Bremshebel bezeichnet). Die Zuspanneinheit und die Druckstempel 6 mit der Druckplatte 10 sind in dem Bremssattel bzw. Bremsgehäuse angeordnet. Das Gewinderohr 14 ist auch ein Bestandteil einer Nachstelleinrichtung 17 zur Verschleißnachstellung der Scheibenbremse 1.

Das Gewinderohr 14, dessen Mittelachse in der Zuspannrichtung parallel zu den Achsen der Druckstempel 6 verläuft ist mit seiner Unterseite, die zur Bremsscheibe weist, in einer mit ihr korrespondierenden Aufnahme des Mittelabschnitts 12 der Druckplatte 10 zur Kraftübertragung aufgenommen. Das Gewinderohr 14 ist zur Aufnahme der Nachstelleinrichtung 17 und zur Zusammenwirkung mit dieser vorgesehen. Die Nachstelleinrichtung 17 ist von dem der Unterseite des Gewinderohres 14 gegenüber liegenden Ende des Gewinderohres 14 in dieses einsetzbar. Die Funktion der Nachstelleinrichtung 17 im Zusammenhang mit dem Gewinderohr 14 ist in der Patentschrift DE 10 2009 013 005 B3 ausführlich erläutert, worauf hier verwiesen wird.

Die Brücke 15 und der Hebel 16 werden in der Patentschrift DE 10 2009 013 005 B3 ebenfalls umfassend beschrieben. Der Hebel 16 weist einen Betätigungsabschnitt auf und umgreift die Nachstelleinrichtung 17 gabelförmig mit Lagerabschnitten, in deren Oberseiten Kugeln gelagert sind, mit denen sich der Hebel 16 sich am Bremssattel abstützt. Die Unterseiten dieser Lagerabschnitte stehen jeweils mit Kraftübertragungsabschnitten der Brücke 15 in Kontakt.

Die Brücke 15 steht in diesem Ausführungsbeispiel mit einem Außengewinde des Gewinderohres 14 in Wirkverbindung zur Übertragung von Brems- und Reaktionskräften. Zur näheren Beschreibung wird auf die Patentschrift DE 10 2009 013 005 B3 verwiesen.

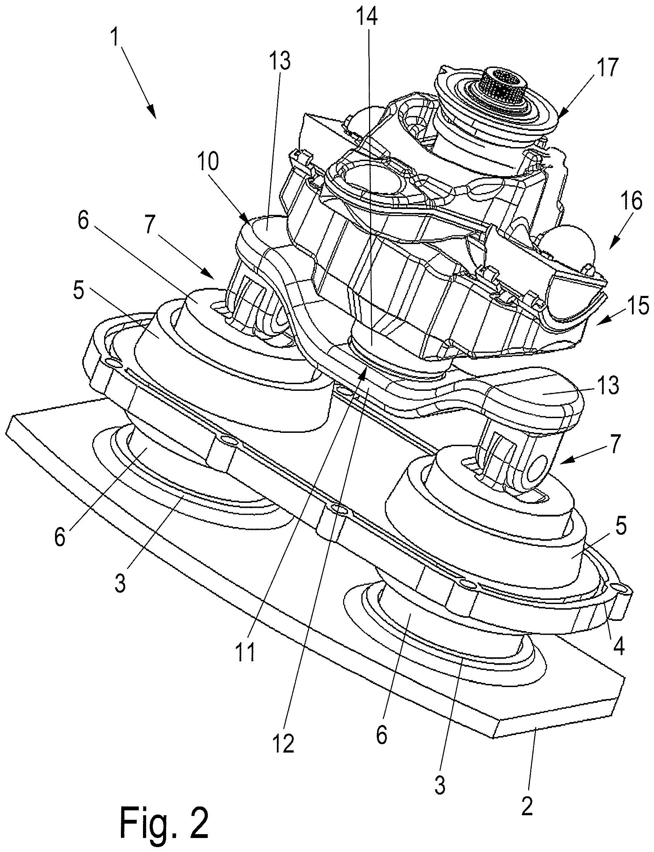

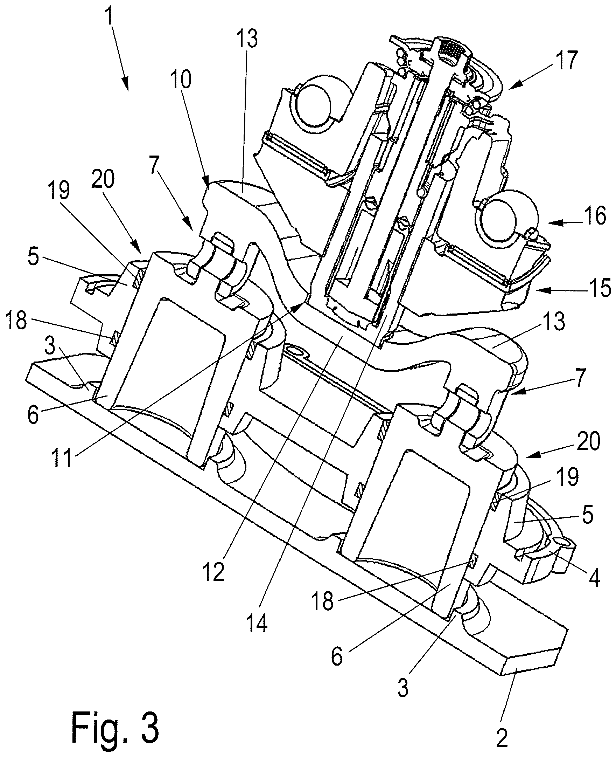

Fig. 2 zeigt eine schematische, perspektivische Ansicht des Ausführungsbeispiels nach Fig. 1 in einem montierten Zustand, und Fig. 3 zeigt eine schematische Schnittdarstellung der Ansicht nach Fig. 2. Bolzen der Druckgelenke 7 sind nicht dargestellt, aber leicht vorstellbar.

In Fig. 2 und 3 ist erkennbar, dass die Nachstelleinrichtung 17 ist im Bremssattel von außen leicht erreichbar und austauschbar angeordnet ist. Es ergibt sich eine robuste und kompakte, sowie servicefreundliche Bauweise der Scheibenbremse 1.

Die Druckstempel 6 sind innerhalb der Druckstempelführungen 5 in der Bodenplatte 4 axial verschiebbar geführt. Dabei beträgt in diesem Ausführungsbeispiel eine Führungslänge der Druckstempel 6 in den Druckstempelführungen 5 etwa eine halbe Länge einer Gesamtlänge eines Druckstempels 6.

Die Druckstempelführungen 5 weisen hier kreiszylinderförmige Gestalt auf. Ihre Mittelachsen sind jeweils koaxial mit der Mittelachse des jeweils eingesetzten Druckstempels 6. Die Druckstempelführungen 5 sind hier mit der Bodenplatte 4 einstückig ausgebildet, wobei jeweils ein Abschnitt, der zum Bremsbelag 2 weist, eine axiale Länge hat, die in etwa der Dicke der Bodenplatte 4 entspricht. Jeweils ein zur Zuspanneinheit weisender Abschnitt der Druckstempelführungen 5 ist mit einer axialen Länge versehen, die etwa die doppelte Dicke der Bodenplatte 4 ausmacht.

Die Dichtungseinrichtung 20 einer Druckstempelführung 5 weist mindestens ein Abstreifelement 18 und mindestens ein Dichtungselement 19 auf. In den zum Bremsbelag 2 weisenden Abschnitten der Druckstempelführungen 5 ist jeweils eine Nut eingeformt, in welcher ein Abstreifelement 18 eingesetzt ist. Das Abstreifelement 18 steht mit der zugehörigen Außenfläche des in die jeweilige Druckstempelführung 5 eingesetzten Druckstempels 6 in Zusammenwirkung und dient zusammen mit dem Dichtungselement 19 zur Abdichtung der Druckstempel 6 gegenüber der Bodenplatte 4 und somit gegenüber dem Bremseninnenraum.

Weiterhin ist in dem der Zuspanneinheit zugewandten jeweiligen Abschnitt der Druckstempelführungen 5 in einem axialen Abstand zu dem jeweiligen Abstreifelement 18 das Dichtungselement 19 angeordnet. In dieser Ausführung ist es in einer entsprechenden radialen Ausnehmung von der Seite der Zuspanneinheit her eingesetzt. Es kann zum Beispiel eine entsprechende Kolbendichtung sein. Das Dichtungselement 19 ist von der Seite der Zuspanneinheit für Wartungs- und Austauschzwecke her leicht erreichbar.

Andere Kombinationen von Dicht- und Abstreifelementen, auch in größerer Anzahl sind natürlich möglich.

Bei einer Bremsenbetätigung verläuft die Kraftübertragung von dem Hebel 16 auf die Brücke 15, welche die Kraft in das Gewinderohr 14 einleitet. Von dort verläuft die Kraftübertragung auf den Krafteinleitungsabschnitt 11 des Mittelabschnitts 12 der Druckplatte 10. Die Druckplatte 10 verteilt die Kraft auf die Druckabschnitte 13 ihrer Druckarme 10a, welche die Kraft jeweils über die Druckgelenke 7 in die Druckstempel 6 und somit auf den Bremsbelag 2 und gleichzeitig aufgrund des SchiebeBremssattels auf den anderen Bremsbelag weiterleiten. Eine Synchronisation der Druckstempel 6 ist somit nicht erforderlich.

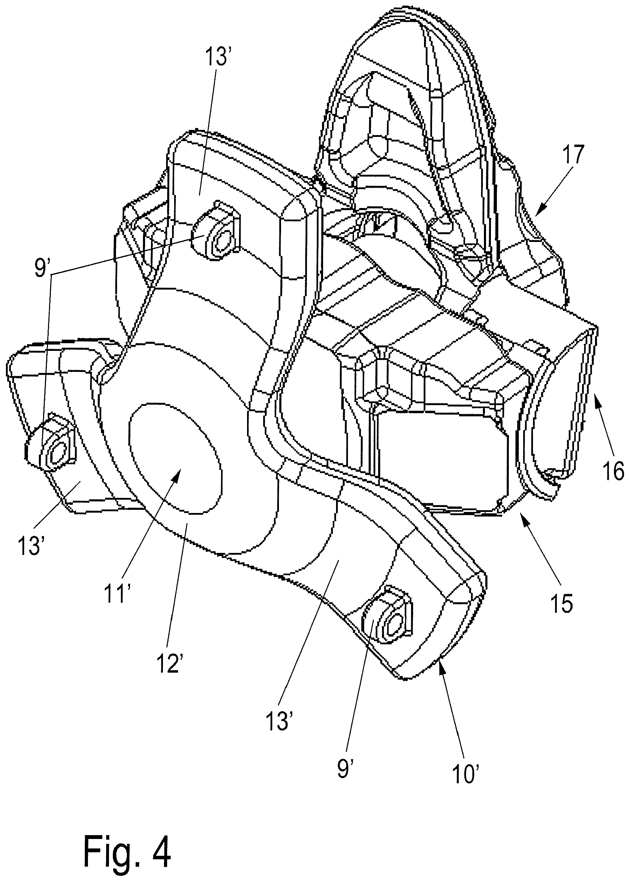

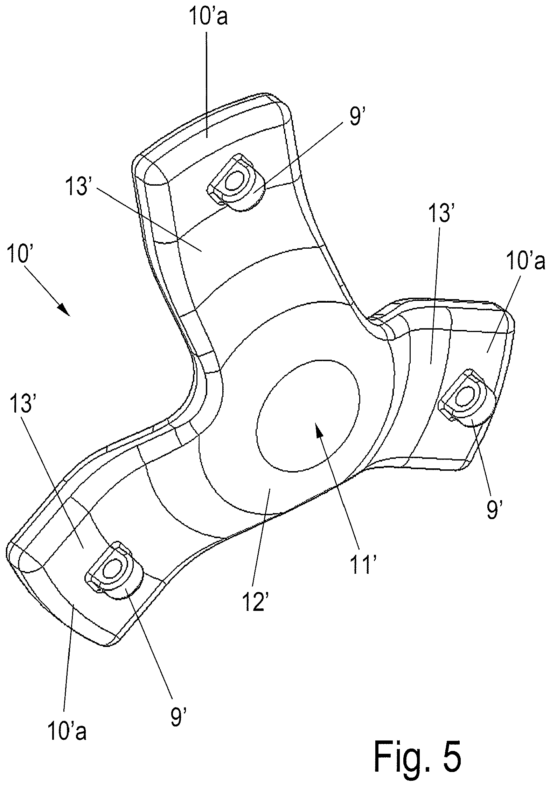

Fig. 4 zeigt eine perspektivische Teilansicht von Bauteilen des Ausführungsbeispiels nach Fig. 1 mit einer dreiarmigen Druckplatte 10'; und Fig. 5 stellt eine perspektivische Ansicht der dreiarmigen Druckplatte 10' nach Fig. 4 dar.

In Fig. 4 ist die Zuspanneinheit mit dem Gewinderohr 14 (durch die Druckplatte 10' verdeckt), die Brücke 15 und dem Hebel 16. Die Nachstelleinrichtung 17 ist angedeutet.

Die Druckplatte 10' ist dreiarmig ausgebildet und weist einen Mittelabschnitt 12' mit einem Krafteinleitungsabschnitt 11' auf. Der Krafteinleitungsabschnitt 11' ist wie bei der Druckplatte des Ausführungsbeispiels mit zwei Druckstempeln 6 nach Fig. 1 ausgebildet und steht ebenso mit der Zuspanneinheit über das Gewinderohr 14 in Zusammenwirkung.

Von dem Mittelabschnitt 12' sind in regelmäßigem Winkelabstand die drei Druckarme 10'a mit jeweils einem Druckabschnitt 13' angeordnet. In der hier gezeigten Variante sind die Druckplattengelenkabschnitte 9' der Druckgelenke 7 als Zungen (wie die Stempelgelenkabschnitte 8 des Ausführungsbeispiels nach Fig. 1) ausgebildet.

Die zugehörigen drei Druckstempel 6 dieser Dreistempel-Scheibenbremse 1 sind nicht gezeigt, aber leicht vorstellbar. Die dazu gehörige Bodenplatte 4 ist mit einer entsprechenden Anzahl und Anordnung von Druckstempelführungen 5 mit den oben beschriebenen Dichtungseinrichtungen 20 ausgestattet.

Die Druckplatten 10 und 10' können zum Beispiel als Gussteile oder Schmiedeteile hergestellt sein, wobei die Druckplattengelenkabschnitte 9, 9' durch Nachbearbeitung geformt werden. Andere Herstellungsarten sind natürlich möglich.

Die Erfindung ist nicht auf die oben beschriebenen Ausführungsbeispiele beschränkt. Sie ist im Rahmen der beigefügten Ansprüche modifizierbar.

So können zum Beispiel der Hebel 16 und auch die Druckplatten 10, 10' in einer optimierten Variante gusstechnisch mit einer entsprechenden festigkeitsoptimierten Formgebung produziert werden. Hierdurch werden Kosten und Fertigungsaufwand reduziert.

### Bezugszeichenliste

- 1: Scheibenbremse
- 2: Bremsbelag
- 3: Druckabschnitt
- 4: Bodenplatte
- 5: Druckstempelführung
- 6: Druckstempel
- 7: Druckgelenk
- 8: Stempelgelenkabschnitt
- 9, 9': Druckplattengelenkabschnitt
- 10, 10': Druckplatte
- 10a, 10'a: Druckarm
- 11, 11': Krafteinleitungsabschnitt
- 12, 12': Mittelabschnitt
- 13, 13': Druckabschnitt
- 14: Gewinderohr
- 15: Brücke
- 16: Hebel
- 17: Nachstelleinrichtung
- 18: Abstreifelement
- 19: Dichtungselement
- 20: Dichtungseinrichtung

## Patentansprüche

1. Mehrfachkolben-Scheibenbremse (1) mit:
einem eine Bremsscheibe übergreifenden Bremssattel;
mindestens zwei Druckstempeln (6), welche zur Aufbringung einer Zuspannkraft auf wenigstens einen Bremsbelag (2) in Richtung der Bremsscheibe in dem Bremssattel beweglich angeordnet sind;
einer Druckplatte (10, 10'), welche mit den mindestens zwei Druckstempeln (6) gekoppelt ist;
einer Zuspanneinheit, welche ein Druckrohr (14) mit einer Nachstelleinrichtung (17), eine Brücke (15) und einen Hebel (16) aufweist;
wobei
jeder der mindestens zwei Druckstempel (6) in einer mit dem Bremssattel fest verbundenen Druckstempelführung (5), welche in einer Bodenplatte (4) angeordnet und mit der Bodenplatte (4) einstückig ausgebildet ist, axial verschiebbar gelagert ist,
wobei
die Druckstempelführung (5) eine Dichtungseinrichtung (20) aufweist, welche mit einem zugehörigen Druckstempel (6) zusammenwirkt und mindestens ein Abstreifelement (18) und mindestens ein Dichtungselement (19) aufweist, **dadurch gekennzeichnet, dass**
das mindestens eine Abstreifelement (18) auf der dem Bremsbelag (2) zugewandten Seite der Bodenplatte (4) angeordnet ist und das mindestens eine Dichtungselement (19) auf der dem Bremsbelag (2) abgewandten Seite der Bodenplatte (4) angeordnet ist.

2. Mehrfachkolben-Scheibenbremse (1) nach Anspruch 1, **dadurch gekennzeichnet, dass** das mindestens eine Dichtungselement (19) von der dem Bremsbelag (2) abgewandten Seite der Bodenplatte (4) her erreichbar und auswechselbar ist.

3. Mehrfachkolben-Scheibenbremse (1) nach einem der vorhergehenden Ansprüche, **dadurch gekennzeichnet, dass** die Druckplatte (10, 10') mit den mindestens zwei Druckstempeln (6) über Druckgelenke (7), die um eine Achse, die senkrecht zu einer Zuspannrichtung und tangential zur Drehrichtung der Bremsscheibe angeordnet ist, verschwenkbar sind, gekoppelt ist.

4. Mehrfachkolben-Scheibenbremse (1) nach Anspruch 3, **dadurch gekennzeichnet, dass** die Druckgelenke (7), die Druckplatte (10, 10') und die in den Druckstempelführungen (5) der Bodenplatte (4) geführten Druckstempel (6) miteinander eine relativ starre Verbindung der Druckstempel (6) bilden.

5. Mehrfachkolben-Scheibenbremse (1) nach einem der vorhergehenden Ansprüche, **dadurch gekennzeichnet, dass** die Druckplatte (10, 10') und/oder der Hebel (16) als bearbeitetes Schmiedeteil oder als Gussteil ausgebildet sind.

6. Mehrfachkolben-Scheibenbremse (1) nach einem der vorhergehenden Ansprüche, **dadurch gekennzeichnet, dass** die Nachstelleinrichtung (17) im Bremssattel von außen erreichbar und austauschbar angeordnet ist.

7. Bremsanlage für ein Fahrzeug, mit einer Mehrfachkolben-Scheibenbremse (1) nach einem der vorhergehenden Ansprüche.

## Claims

1. Multiple-piston disc brake (1), comprising:
a brake calliper overlapping a brake disc;
at least two plungers (6), which are arranged movably in the brake calliper to apply an application force to at least one brake pad (2) in the direction of the brake disc;
a pressure plate (10, 10'), which is coupled to the at least two plungers (6);
an application unit, which has a pressure tube (14) having an adjustment device (17), a bridge (15) and a lever (16);
wherein
each of the at least two plungers (6) is mounted in an axially movable manner in a plunger guide (5) located in a base plate (4) and integrated with the base plate (4),
wherein the plunger guide (5) has a sealing device (20), which interacts with an associated plunger (6) and which has at least one wiper element (18) and at least one seal element (19),
**characterised in that**
the at least one wiper element (18) is arranged on that side of the base plate (4) which faces the brake pad (2) and the at least one seal element (19) is arranged on that side of the base plate (4) which faces away from the brake pad (2).

2. Multiple-piston disc brake (1) according to claim 1, **characterised in that** the at least one seal element (19) can be reached and exchanged from that side of the base plate (4) which faces away from the brake pad (2).

3. Multiple-piston disc brake (1) according to any of the preceding claims, **characterised in that** the pressure plate (10, 10') is coupled to the at least two plungers (6) by pressure joints (7), which can be pivoted about an axis arranged perpendicularly to an application direction and tangentially to the direction of rotation of the brake disc.

4. Multiple-piston disc brake (1) according to claim 3, **characterised in that** the pressure joints (7), the pressure plate (10, 10') and the plungers (6) guided in the plunger guides (5) of the base plate (4) together form a relatively rigid connection of the plungers (6).

5. Multiple-piston disc brake (1) according to any of the preceding claims, **characterised in that** the pressure plate (10, 10') and/or the lever (16) is/are designed as a machined forging or as a casting.

6. Multiple-piston disc brake (1) according to any of the preceding claims, **characterised in that** the adjustment device (17) is arranged in the brake calliper in such a way that it can be reached and exchanged from the outside.

7. Brake system for a vehicle, comprising a multiple-piston disc brake (1) according to any of the preceding claims.

## Revendications

1. Frein à disque à multi-pistons (1), comprenant :
un étrier chevauchant un disque de frein ;
au moins deux pistons de compression (6), qui sont disposés de façon mobile dans ledit étrier dans une direction vers le disque de frein afin d'appliquer une force de serrage sur au moins une garniture de frein ;
une plaque de pression (10, 10') qui est accouplée auxdits au moins deux pistons de compression (6) ;
une unité de serrage de frein, qui comprend un tube de pression (14 à un moyen de rattrapage (17), un pont (15) et un levier (16) ;
dans lequel
chacun desdits au moins deux pistons de compression (6) est logé de façon axialement mobile dans un guide de piston de compression (5) fixé audit étrier, audit guide étant disposé dans une plaque support (4) et formé intégralement à ladite plaque support (4) ;
dans lequel
ledit guide de piston de compression (5) comprend un moyen d'étanchéité (20), qui coopère avec le piston de compression affecté (6) et comprend au moins un élément racleur (18) et au moins un élément d'étanchéité (19),
**caractérisé en ce**
**que** ledit au moins un élément racleur (18) est disposé du côté de ladite plaque support (4), qui se trouve en face de ladite garniture de frein (2), pendant que ledit au moins un élément d'étanchéité (19) st disposé du côté de ladite plaque support (4), qui est opposé à ladite garniture de frein (2).

2. Frein à disque à multi-pistons (1) selon la revendication 1, **caractérisé en ce que**, partant du côté de ladite plaque support (4), qui est oppose à ladite garniture de frein (2), ledit au moins un élément d'étanchéité (19) est accessible et remplaçable.

3. Frein à disque à multi-pistons (1) selon une quelconque des revendications précédentes, **caractérisé en ce que** ladite plaque de compression (10, 10') est accouplée auxdits au moins deux pistons de compression (6) via des articulations de poussée (7), qui sont pivotables autour un axe disposé en une position orthogonale par rapport à une direction de serrage et en une position tangentielle par rapport au sens de rotation du disque de frein.

4. Frein à disque à multi-pistons (1) selon la revendication 3, **caractérisé en ce que** l'ensemble desdites articulations de poussée (7), de ladite plaque de compression (10, 10') et desdits pistons de compression (6) guidés dans lesdits guides de piston de compression (5) de ladite plaque support (4) constitue une connexion relativement rigide desdits pistons de compression (6).

5. Frein à disque à multi-pistons (1) selon une quelconque des revendications précédentes, **caractérisé en ce que** ladite plaque de compression (10, 10) et/ou ledit levier (16) est/sont configuré(s) sous forme d'une pièce forgée usinée ou d'une pièce de moulage.

6. Frein à disque à multi-pistons (1) selon une quelconque des revendications précédentes, **caractérisé en ce que** ledit moyen de rattrapage (17) est disposé dans ledit étrier pour être accessible de l'extérieur et remplaçable.

7. Dispositif de freinage pour un véhicule, comprenant un frein à disque à multi-pistons (1) selon une quelconque des revendications précédentes.
